# EUROPEAN PATENT APPLICATION

(11) **EP 4 715 893 A1**
(43) Date of publication of application: **25.03.2026**
(21) Application number: 24940301.5
(22) Date of filing: 30.05.2024
(51) Int. Cl.: H01M 4/139, H01M 4/04

(54) **ELECTRODE SHEET MANUFACTURING METHOD AND COATING APPARATUS**

(30) Priority: 08.05.2024 CN 202410558822
(71) Applicant: ZHEJIANG LIWINON ENERGY TECHNOLOGY CO., LTD., Jinhua, Zhejiang 321102 (CN)
(72) Inventor: LIU, Husheng, Jinhua, Zhejiang 321102 (CN); ZOU, Jun, Jinhua, Zhejiang 321102 (CN); WANG, Zhonghui, Jinhua, Zhejiang 321102 (CN); JI, Rongjin, Jinhua, Zhejiang 321102 (CN); LI, Cong, Jinhua, Zhejiang 321102 (CN); WU, Shengben, Jinhua, Zhejiang 321102 (CN); CHEN, Jie, Jinhua, Zhejiang 321102 (CN)
(74) Representative: Primiceri, Maria Vittoria
(86) International application number: PCT/CN2024/096354
(87) International publication number: WO 2025/231945

(57) **Abstract**

An electrode sheet manufacturing method and a coating apparatus. The electrode sheet manufacturing method comprises the steps of: coating a surface to be coated of a current collector with a first active material so as to form a first film layer; coating said surface with a second active material to form a second film layer; coating said surface with a third active material so as to form a third film layer; and after the first film layer, the second film layer and the third film layer are all formed, the second film layer and the third film layer being both connected to the first film layer, the second film layer and the third film layer being sequentially distributed at intervals in a first direction, the second film layer and the third film layer being located on the same side of the first film layer, and the first film layer, the second film layer, the third film layer and said surface jointly defining a tab welding slot. In the method, the tab welding slot is manufactured by coating, without the need to manufacture the tab welding slot by laser cleaning, and the method is beneficial to reducing the manufacturing cost of electrode sheets.

## Description

### TECHNICAL FIELD

The present disclosure relates to the field of battery technologies, and in particular, to a method of manufacturing an electrode sheet and a coating device.

### BACKGROUND

An electrode sheet of a battery cell is usually provided with a tab welding groove, where a portion of a current collector at the tab welding groove is not covered by an active material layer. A tab is welded to the current collector exposed at the tab welding groove. To form the tab welding groove, a notch needs to be formed in the active material layer of the electrode sheet. In the prior art, the tab welding groove is generally processed as follows. First, the current collector is coated with an active material to form the active material layer, which is initially rectangular after the coating is completed. Then, the active material layer is laser-cleaned to remove a portion of the active material layer from the current collector. After the laser cleaning is completed, a notch appears in the active material layer, forming the tab welding groove on the electrode sheet. However, the laser cleaning is costly, resulting in high manufacturing costs of the electrode sheet.

### SUMMARY

The present disclosure aims to resolve at least one of the technical problems existing in the prior art. Therefore, the present disclosure provides a method of manufacturing an electrode sheet. According to the method, a tab welding groove is constructed through coating without laser cleaning, which helps to reduce manufacturing costs of an electrode sheet.

The present disclosure further provides a coating device.

The method of manufacturing an electrode sheet according to an embodiment in a first aspect of the present disclosure includes the following steps: coating a to-be-coated surface of a current collector with a first active material to form a first film layer; coating the to-be-coated surface with a second active material to form a second film layer; and coating the to-be-coated surface with a third active material to form a third film layer. Any two of the first active material, the second active material, and the third active material are made of the same material; after the first film layer, the second film layer, and the third film layer are formed, the second film layer and the third film layer are both connected to the first film layer; the second film layer and the third film layer are distributed at intervals along a first direction; the first film layer and the second film layer are distributed along a second direction and connected to each other; the second film layer and the third film layer are located on the same side of the first film layer; the third film layer is connected to the first film layer; any two of the first direction, the second direction, and a thickness direction of the current collector are perpendicular to each other; and the first film layer, the second film layer, and the third film layer, and the to-be-coated surface jointly define a tab welding groove.

The method of manufacturing an electrode sheet according to the embodiment in the first aspect of the present disclosure has at least the following advantages: After the coating of the first film layer, the second film layer, and the third film layer is completed, the three jointly constitute an active material layer of an electrode sheet. The first film layer, the second film layer, the third film layer, and the to-be-coated surface jointly define the tab welding groove. In this way, the tab welding groove does not need to be formed through laser cleaning. The manufacturing method helps to reduce manufacturing costs of the electrode sheet.

According to some embodiments of the present disclosure, the step of forming the first film layer includes: coating the first active material along the first direction; the step of forming the second film layer includes: coating the second active material along the first direction; and the step of forming the third film layer includes: coating the third active material along the first direction.

According to some embodiments of the present disclosure, the first active material and the second active material are coated synchronously during a first time period; the first active material coated during the first time period forms a first front section; the second active material coated during the first time period forms the second film layer; and the first front section and the second film layer are distributed along the second direction and connected to each other; the first active material is coated during a second time period; and the first active material coated during the second time period forms a first middle section; the first active material and the third active material are coated synchronously during a third time period; the first active material coated during the third time period forms a first rear section; the third active material coated during the third time period forms the third film layer; the first rear section and the third film layer are distributed along the second direction and connected to each other; and a coating end point of the second active material and a coating start point of the third active material are distributed at intervals along the first direction; and the first time period, the second time period, and the third time period are sequentially set chronologically; and the first front section, the first middle section, and the first rear section are sequentially connected along the first direction to form the first film layer.

According to some embodiments of the present disclosure, the first film layer, the second film layer, and the third film layer jointly constitute an active material layer, a junction between the first film layer and the second film layer is a first junction region; a junction between the first film layer and the third film layer is a second junction region; and a region in the active material layer other than the first junction region and the second junction region is a normal region; and a thickness of the first junction region is K₁, a thickness of the second junction region is K₂, a thickness of the normal region is M, and the active material layer satisfies: 0.95 ≤ K₁/M ≤ 1, and/or 0.95 ≤ K₂/M ≤ 1.

According to some embodiments of the present disclosure, the method of manufacturing an electrode sheet includes the following steps: coating a to-be-coated surface of a current collector jumbo roll with a first active material to form a plurality of first film layers, where a coating direction of the first active material is a first direction; the plurality of first film layers are distributed at intervals along a second direction; and any two of the first direction, the second direction, and a thickness direction of the current collector are perpendicular to each other; coating the to-be-coated surface with a second active material and a third active material to form a plurality of discontinuous layers, where the discontinuous layer includes a second film layer and a third film layer distributed at intervals along the first direction; and after the discontinuous layers and the first film layers are formed, the first film layers and the discontinuous layers are alternately distributed in the second direction; the second film layer and the third film layer are both connected to the first film layer; and the number of discontinuous layers is the same as the number of the first film layers; and splitting an intermediate product to form a plurality of electrode sheets, where the intermediate product is the current collector jumbo roll provided with the plurality of first film layers and the plurality of discontinuous layers; and the current collector jumbo roll is split into a plurality of current collectors; the electrode sheet obtained through splitting includes the current collector, the first film layer, the second film layer, and the third film layer; and the first film layer, the second film layer, the third film layer, and the current collector jointly define a tab welding groove.

The coating device according to an embodiment in a second aspect of the present disclosure includes a discharge mechanism and a feeding mechanism connected to each other; the discharge mechanism has a first discharge port and a second discharge port distributed along the second direction; and the feeding mechanism and the discharge mechanism are configured as follows: during the first time period, the feeding mechanism causes the first active material to flow out of the first discharge port, and causes the second active material to flow out of the second discharge port; during the second time period, the feeding mechanism causes the first active material to flow out of the first discharge port; and during the third time period, the feeding mechanism causes the first active material to flow out of the first discharge port, and causes the third active material to flow out of the second discharge port.

According to some embodiments of the present disclosure, the discharge mechanism includes two coating heads, one of the coating heads is provided with the first discharge port, and the other coating head is provided with the second discharge port; or the discharge mechanism includes one coating head, and the first discharge port and the second discharge port are arranged on the same coating head.

According to some embodiments of the present disclosure, the coating device includes a discharge mechanism and a feeding mechanism connected to each other; the discharge mechanism has a plurality of first discharge ports and a plurality of second discharge ports; the first discharge ports and the second discharge ports are alternately distributed in the second direction; and the feeding mechanism and the discharge mechanism are configured as follows: during a first time period, the feeding mechanism causes the first active material to flow out of the plurality of first discharge ports respectively, and causes the second active material to flow out of the plurality of second discharge ports; during a second time period, the feeding mechanism causes the first active material to flow out of the plurality of first discharge ports respectively; and during a third time period, the feeding mechanism causes the first active material to flow out of the plurality of first discharge ports respectively, and causes the third active material to flow out of the plurality of second discharge ports respectively. The first time period, the second time period, and the third time period are sequentially set chronologically.

According to some embodiments of the present disclosure, the first discharge ports and the second discharge ports are distributed at intervals in the second direction; a length of the tab welding groove in the second direction is A, a spacing between two adjacent tab welding grooves in the second direction is B, a length of the first discharge port in the second direction is W₁, a length of the second discharge port in the second direction is W₂, 0.5 mm ≤ A - W₂ ≤ 3 mm, and 0.5 mm ≤ B - W₁ ≤ 3 mm.

According to some embodiments of the present disclosure, A - W₂ = 2 mm, and B - W₁ = 2 mm.

According to some embodiments of the present disclosure, the discharge mechanism includes one coating head, and the coating head includes: an upper die; a middle die, where the upper die and the middle die are stacked and define a first flow channel for the first active material to flow, and the first flow channel includes a first discharge slit; a lower die, where the lower die and the middle die are stacked and define a second flow channel for the second active material and the third active material to flow, the second flow channel includes a second discharge slit, the upper die and the lower die are respectively located on different sides of the middle die, and the first flow channel and the second flow channel are separated from each other; an upper shim, where the upper shim is sandwiched between the upper die and the middle die, the upper shim includes a plurality of first separators distributed at intervals along the second direction, a portion of the first discharge slit is blocked by the first separators, portions of the first discharge slit exposed outside the first separators form the plurality of first discharge ports, and one first discharge port is provided between two adjacent first separators; and a lower shim, where the lower shim is sandwiched between the lower die and the middle die, the lower shim includes a plurality of second separators distributed at intervals along the second direction, a portion of the second discharge slit is blocked by the second separators, portions of the second discharge slit exposed outside the first separators form the plurality of second discharge ports, and one second discharge port is provided between two adjacent second separators.

According to some embodiments of the present disclosure, the first separator is provided with a first chamfer at an end located within the first discharge slit, and a width of the first chamfer is 0.5 mm to 5 mm; and/or the second separator is provided with a second chamfer at an end located within the second discharge slit, and a width of the second chamfer is 0.5 mm to 5 mm.

According to some embodiments of the present disclosure, the upper shim further includes a first step portion; a thickness of the first step portion is less than a thickness of the first separator; the first step portion is connected to a side portion of the first separator at an end of the first separator located within the first discharge slit; and the thickness of the first step portion is 0.2 mm to 0.6 mm; and/or the lower shim further includes a second step portion; a thickness of the second step portion is less than a thickness of the second separator; the second step portion is connected to a side portion of the second separator at an end of the second separator located within the second discharge slit; and the thickness of the second step portion is 0.2 mm to 0.6 mm.

Additional aspects and advantages of the present disclosure are set forth in the following description, some of which will become apparent in the following description, or be known by practice of the present disclosure.

### BRIEF DESCRIPTION OF THE DRAWINGS

The following further describes the present disclosure with reference to accompanying drawings and embodiments.
FIG. 1 is a top view of an electrode sheet to be manufactured according to a method of manufacturing an electrode sheet of the present disclosure;
FIG. 2 is a schematic diagram of a method of manufacturing an electrode sheet according to an embodiment of the present disclosure;
FIG. 3 is a schematic diagram of a process of forming a first film layer, a second film layer, and a third film layer according to an embodiment of the present disclosure;
FIG. 4 is a schematic diagram of a process of forming a plurality of first film layers and a plurality of discontinuous layers according to an embodiment of the present disclosure;
FIG. 5 is a schematic diagram of a process of splitting an intermediate product;
FIG. 6 is a schematic diagram of a current collector (or a current collector jumbo roll) passing through a coating head;
FIG. 7 is a schematic simplified diagram of a coating head;
FIG. 8 is a schematic diagram of an upper shim and a lower shim according to an embodiment of the present disclosure;
FIG. 9 is a schematic diagram of an upper shim and a lower shim according to another embodiment of the present disclosure;
FIG. 10 is an enlarged view of a region C in FIG. 9; and
FIG. 11 is an enlarged view of a region D in FIG. 9.

Reference numerals:
101: electrode sheet, 102: current collector, 103: to-be-coated surface, 104: discontinuous layer, 105: first film layer, 106: second film layer, 107: third film layer, 108: tab welding groove, 109: first front section, 110: first middle section, 111: first rear section, and 112: current collector jumbo roll; and
201: coating head, 202: first discharge port, 203: second discharge port, 204: upper die, 205: middle die, 206: lower die, 207: upper shim, 208: lower shim, 209: first separator, 210: first chamfer, 211: first discharge slit, 212: second separator, 213: second chamfer, 214: second discharge slit, 215: first step portion, and 216: second step portion.

### DETAILED DESCRIPTION

Embodiments of the present disclosure will be described in detail hereinafter in conjunction with accompanying drawings in which the same or like reference numerals refer to the same or like elements or elements having the same or like functions throughout. The embodiments described below by reference to the accompanying drawings are illustrative and are intended for illustrating only and are not to be construed as limiting the present disclosure.

In the description of the present disclosure, it should be understood that for the description of orientations, the orientation or positional relationships indicated by the terms such as "upper," "lower," "front," "rear," "left," "right," and the like are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting the present disclosure.

In the description of the present disclosure, the term "at least one" means one or more, the term "plurality of" (or multiple) means at least two, the term such as "greater than," "less than," "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first," "second," and the like are merely used for distinguishing technical features, and are not intended to indicate or imply relative importance, or implicitly point out the number of the indicated technical features, or implicitly point out the precedence order of the indicated technical features.

In the description of the present disclosure, unless otherwise explicitly defined, the terms such as "configure," "install/mount" and "connect" should be understood in a broad sense, and those having ordinary skills in the art can reasonably determine the specific meanings of the above terms in the present disclosure based on the specific contents of the technical scheme.

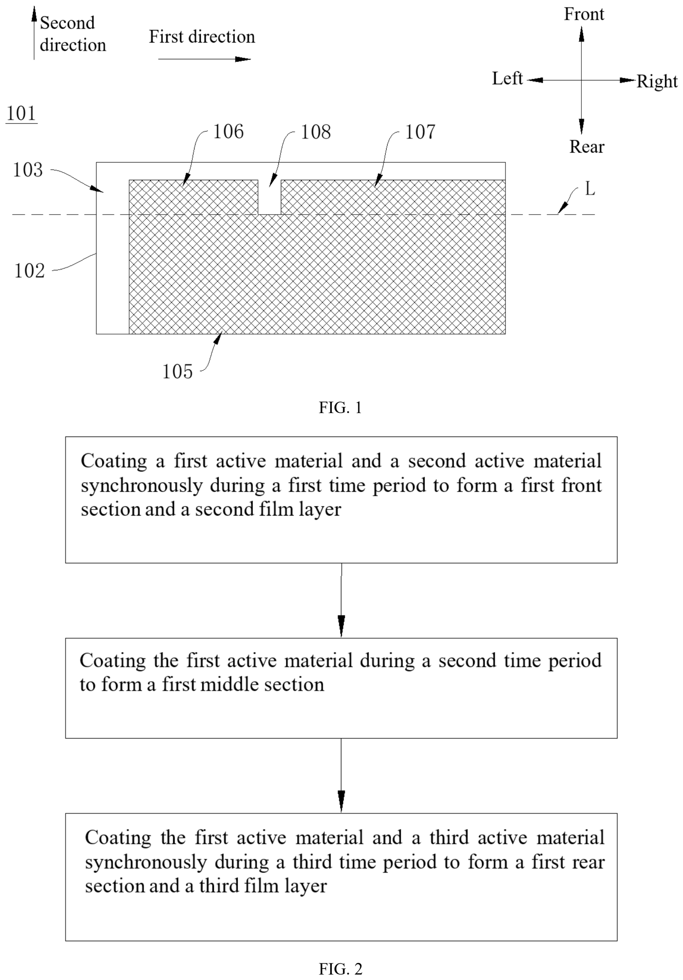

FIG. 1 shows an electrode sheet 101. The electrode sheet 101 can be used in wound battery cells, and FIG. 1 shows the electrode sheet 101 in a flattened state. Both the prior art and technical solutions of the present disclosure can be used to manufacture the electrode sheet 101 shown in FIG. 1. Furthermore, a method of manufacturing an electrode sheet of the present disclosure can also be used to manufacture an electrode sheet 101 suitable for a laminated battery cell. The electrode sheet 101 of the laminated battery cell also needs to be provided with a tab welding groove 108.

FIG. 1 shows the electrode sheet 101 from a top view rather than a cross-sectional view. In FIG. 1, a portion, namely, an active material layer, is filled with grid lines to distinguish the active material layer from a current collector 102. In the prior art, a process of manufacturing the electrode sheet 101 shown in FIG. 1 is generally as follows. First, the active material layer is arranged on a surface of the current collector 102 through a coating process. The formed active material layer is rectangular. The active material layer being rectangular is determined by an existing coating device or process. A coating head of the coating device has a slit that allows slurry of an active material to flow out. During coating, the current collector 102 is conveyed and passes through the slit of the coating head. In this way, the active material layer obtained after coating is rectangular (which is rectangular before laser cleaning). After the coating is completed, the rectangular active material layer is cleaned through a laser cleaning process, to remove a portion of the active material layer and form the tab welding groove 108 shown in FIG. 1. The laser cleaning is costly, resulting in high manufacturing costs of the electrode sheet 101.

To resolve the problem of high costs of the electrode sheet 101, according to the method of manufacturing an electrode sheet of the present disclosure, the tab welding groove 108 does not need to be formed through laser cleaning.

In an embodiment, the method of manufacturing an electrode sheet of the present disclosure includes the following steps:
S11: coating to-be-coated surface 103 of a current collector 102 with a first active material to form a first film layer 105;
S12: coating the to-be-coated surface 103 with a second active material to form a second film layer 106; and
S13: coating the to-be-coated surface 103 with a third active material to form a third film layer 107.

Any two of the first active material, the second active material, and the third active material are made of the same material. The three names are mainly used to distinguish between active materials applied in different steps. For lithium-ion battery cells, materials of the current collector 102 and the active materials are well-known in the art, which are not described in detail here.

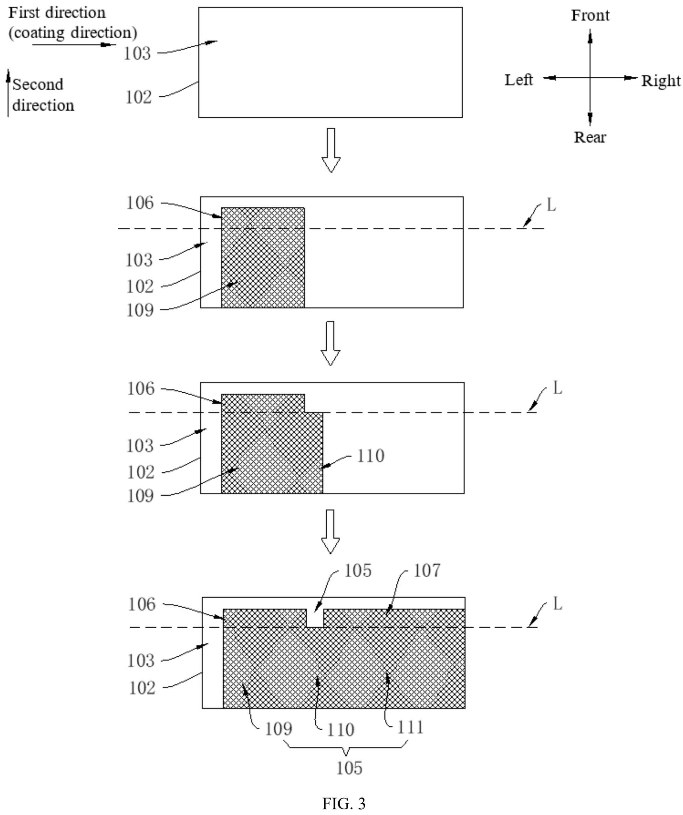

As shown in FIG. 1, after the first film layer 105, the second film layer 106, and the third film layer 107 are formed, the three jointly constitute an active material layer of an electrode sheet 101. In FIG. 1 and FIG. 3, a dashed line L represents a boundary between the first film layer 105 and the second film layer 106, and a boundary between the first film layer 105 and the third film layer 107. The dashed line L coincides with a rear edge of a tab welding groove 108. The second film layer 106 and the third film layer 107 are both connected to the first film layer 105. The second film layer 106 and the third film layer 107 are distributed at intervals along a first direction. The first film layer 105 and the second film layer 106 are distributed along a second direction and connected to each other. The second film layer 106 and the third film layer 107 are located on the same side of the first film layer 105, and the third film layer 107 is also connected to the first film layer 105. In this way, the first film layer 105, the second film layer 106, the third film layer 107, and the to-be-coated surface 103 jointly define the tab welding groove 108. Therefore, according to the method of manufacturing an electrode sheet of this embodiment, the tab welding groove 108 does not need to be formed through laser cleaning, which helps to reduce manufacturing costs of the electrode sheet 101.

Any two of the first direction, the second direction, and a thickness direction of the current collector 102 are perpendicular to each other. For example, the first direction can be a left-to-right direction, the second direction can be a front-to-rear direction, and the thickness direction of the current collector 102 can be an up-down direction (a direction perpendicular to a plane of paper of FIG. 1). The to-be-coated surface 103 of the current collector 102 can be an end surface of the current collector 102 in the thickness direction of the current collector 102. For example, the to-be-coated surface 103 of the current collector 102 is an upper surface of the current collector 102. FIG. 3 shows a process of coating the upper surface of the current collector 102. If a lower surface of the current collector 102 also needs to be provided with an active material layer, a manner of coating the lower surface of the current collector 102 can be the same as the manner of coating the upper surface.

It should be noted that in the present disclosure, some steps in the method are marked with symbols such as "S11" and "S12", but the marking with these symbols is performed only for convenient reference to the steps, and numerical values in these symbols do not directly represent an order of the steps. Temporal relationships between the three steps are not listed here one by one. A coating direction of the first film layer 105, the second film layer 106, and the third film layer 107 is not specifically limited, provided that the three layers are finally formed through coating. Furthermore, a preferred coating direction and a preferred coating order of the film layers are described below.

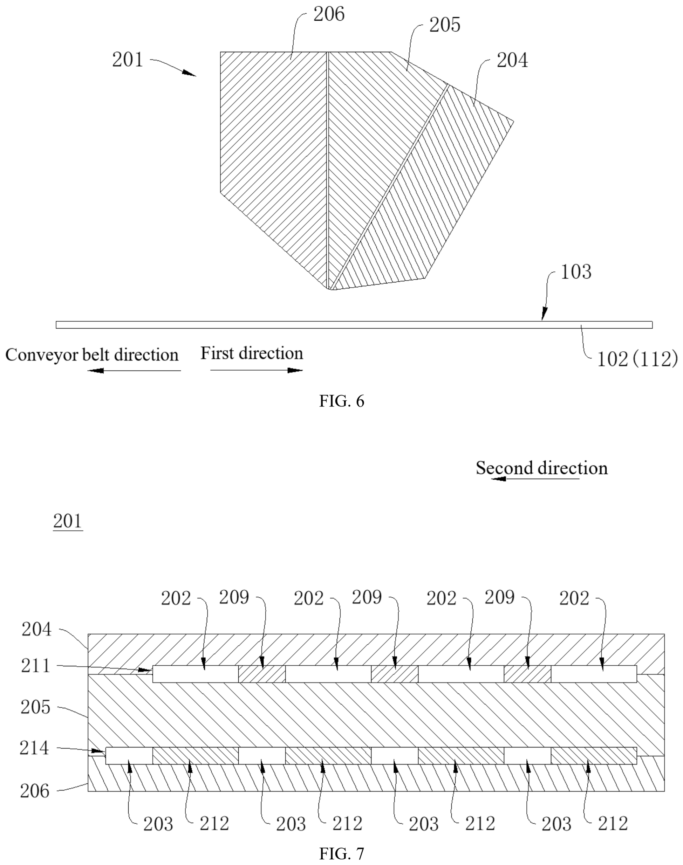

In some embodiments, the step of forming the first film layer 105 includes: coating the first active material along the first direction. The step of forming the second film layer 106 includes: coating the second active material along the first direction. The step of forming the third film layer 107 includes: coating the third active material along the first direction. Such arrangement has the following advantages. When different film layers are formed, a coating head 201 used for coating moves along the same direction relative to the current collector 102, so that a movement direction of the coating head 201 does not need to be frequently adjusted during production of electrode sheets 101, which helps to improve coating efficiency, thereby improving production efficiency of the electrode sheets 101. The coating the first active material along the first direction means that the coating head 201 used to spray the first active material moves along the first direction relative to the current collector 102. Correspondingly, a movement direction of the current collector 102 relative to the coating head 201 is a conveyor belt direction of the current collector 102. The conveyor belt direction is opposite to the first direction (as shown in FIG. 6). Similarly, the coating the second active material along the first direction means that the coating head 201 used to spray the second active material moves along the first direction relative to the current collector 102. The coating the third active material along the first direction means that the coating head 201 used to spray the third active material moves along the first direction relative to the current collector 102.

As shown in FIG. 2, in some embodiments, the first active material and the second active material are coated synchronously during a first time period (denoted as t₁ below). During a second time period (denoted as t₂ below), only the first active material is applied, and neither the second active material nor the third active material is applied. During a third time period (denoted as t₃ below), the first active material and the third active material are coated synchronously. t₁, t₂, and t₃ are sequentially set chronologically. Duration of any one of the three time periods t₁, t₂, and t₃ is not zero, and an end point of t₁ can be a start point of t₂, and an end point of t₂ can be a start point of t₃. Duration of t₁, t₂, and t₃ depends on a size of the tab welding groove 108 that needs to be formed and lengths of the film layers, and are not specifically limited in the present disclosure.

As shown in FIG. 3, the first active material coated during t₁ forms a first front section 109, and the second active material coated during t₁ forms the second film layer 106. The first front section 109 and the second film layer 106 are distributed along the second direction and connected to each other. The first active material coated during t₂ forms a first middle section 110. A coating start point of the first middle section 110 is also a coating end point of the first front section 109 (the two coincide). The first active material coated during t₃ forms a first rear section 111, and the third active material coated during t₃ forms the third film layer 107. A coating end point of the second active material and a coating start point of the third active material are distributed at intervals in the first direction. A coating start point of the first rear section 111 is also a coating end point of the first middle section 110 (the two coincide).

As shown in FIG. 3, after t₃ ends, the first front section 109, the first middle section 110, and the first rear section 111 are sequentially connected along the first direction to form the first film layer 105. In this embodiment, a portion (the first front section 109) of the first film layer 105 is formed synchronously with the second film layer 106; and another portion (the first rear section 111) of the first film layer 105 is formed synchronously with the third film layer 107. This helps to reduce a total time required for the coating process, thereby improving coating efficiency and manufacturing efficiency of the electrode sheet 101.

A coating device capable of simultaneously forming the first front section 109 and the second film layer 106 and simultaneously forming the first rear section 111 and the third film layer 107 is described below.

In some embodiments, the coating device includes a discharge mechanism and a feeding mechanism connected to each other. The discharge mechanism has a first discharge port 202 and a second discharge port 203 distributed along the second direction. The feeding mechanism and the discharge mechanism are configured as follows: during t₁, the feeding mechanism causes the first active material to flow out of the first discharge port 202, and causes the second active material to flow out of the second discharge port 203; during t₂, the feeding mechanism causes the first active material to flow out of the first discharge port 202, and no active material flows out of the second discharge port 203; and during t₃, the feeding mechanism causes the first active material to flow out of the first discharge port 202, and causes the third active material to flow out of the second discharge port 203.

In this way, during t₁, the first active material flowing out of the first discharge port 202 finally forms the first front section 109, and the second active material flowing out of the second discharge port 203 forms the second film layer 106. During t₂, the first active material flowing out of the first discharge port 202 finally forms the first middle section 110. During t₃, the first active material flowing out of the first discharge port 202 finally forms the first rear section 111, and the third active material flowing out of the second discharge port 203 finally forms the third film layer 107. In this embodiment, the first discharge port 202 performs continuous discharging, while the second discharge port 203 in parallel to the first discharge port 202 performs discontinuous discharging (the discontinuous means discharging is not performed during t₂ but performed during t₁ and t₃), to form the first film layer 105, the second film layer 106, and the third film layer 107 on the current collector 102.

It should be noted that when the first discharge port 202 and the second discharge port 203 are distributed along the second direction, the first discharge port 202 and the second discharge port 203 can be spaced apart from each other or coincide with each other in the conveyor belt direction.

In some embodiments, the feeding mechanism can include a tank, a conveying pipe, a conveying pump, and a valve. The discharge mechanism can include one coating head 201 (as shown in FIG. 6), and the first discharge port 202 and the second discharge port 203 are located on the same coating head 201 (as shown in FIG. 7). The tank is configured to store slurry containing the active material. The tank and the coating head 201 are connected by several conveying pipes. The conveying pump is configured to drive the active material to flow along the conveying pipes. One of the conveying pipes conveys the active material to the first discharge port 202, and another conveying pipe conveys the active material to the second discharge port 203. Each conveying pipe has a valve mounted. When the conveying pump is operating, the active material can be controlled to flow out of a discharge port by controlling states of the valves. For example, during t₁ and t₃, the valve on the conveying pipe connected to the first discharge port 202 is in an open state, and the valve on the conveying pipe connected to the second discharge port 203 is also in the open state; and during t₂, the valve on the conveying pipe connected to the first discharge port 202 is in the open state, and the valve on the conveying pipe connected to the second discharge port 203 is in a closed state.

In some other embodiments, the discharge mechanism can alternatively include two coating heads 201, the first discharge port 202 is located on one of the coating heads 201, and the second discharge port 203 is located on the other coating head 201. In the embodiments shown in FIG. 6 and FIG. 7, the first discharge port 202 and the second discharge port 203 are located on the same coating head 201. This helps to reduce the number of coating heads 201, thereby reducing a size of the discharge mechanism.

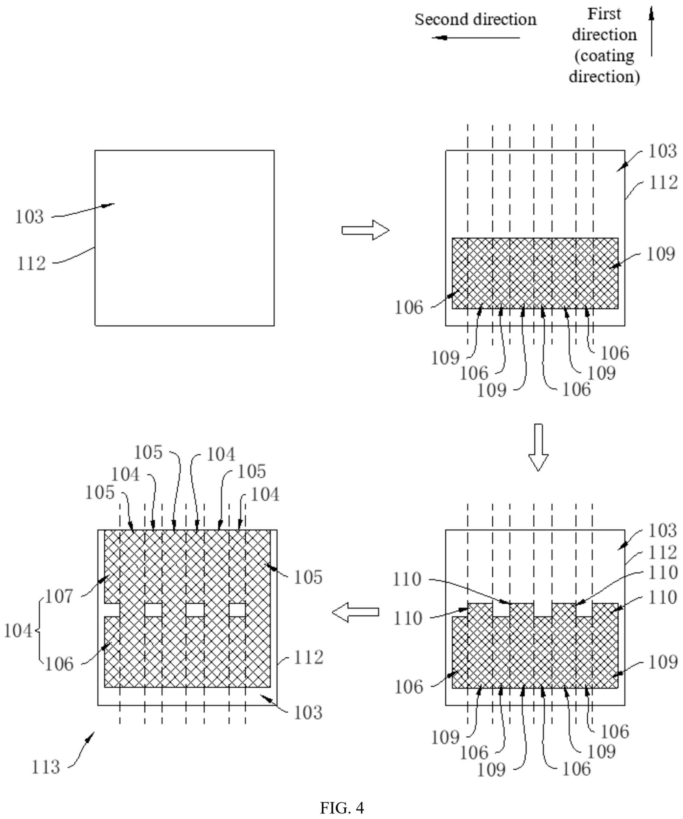

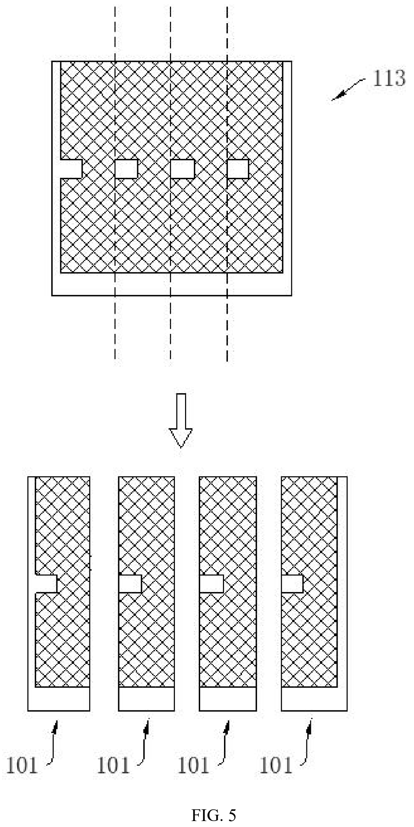

To increase productivity of electrode sheets 101, a current collector jumbo roll 112 can be first coated with an active material, and then the current collector 102 and the active material layer can be split to form a plurality of electrode sheets 101. Based on this idea, in some embodiments, the method of manufacturing an electrode sheet includes the following steps:
S21: coating a to-be-coated surface 103 of a current collector jumbo roll 112 with a first active material to form a plurality of first film layers 105, where a coating direction of the first active material is a first direction; and the plurality of first film layers 105 are distributed at intervals along a second direction;
S22: coating the to-be-coated surface 103 with a second active material and a third active material to form a plurality of discontinuous layers 104, where the discontinuous layer 104 includes a second film layer 106 and a third film layer 107 distributed at intervals along the first direction (as shown in FIG. 4); after the discontinuous layers 104 and the first film layers 105 are formed, the first film layers 105 and the discontinuous layers 104 are alternately distributed in the second direction; the second film layer 106 and the third film layer 107 are both connected to the first film layer 105; and the number of discontinuous layers 104 is the same as the number of first film layers 105; and
S23: splitting an intermediate product to form a plurality of electrode sheets 101 (as shown in FIG. 5), where the intermediate product is the current collector jumbo roll 112 provided with the plurality of first film layers 105 and the plurality of discontinuous layers 104.

For step S21, the coating direction of the first active material being the first direction means that a coating head 201 used to spray the first active material moves along the first direction relative to a current collector 102. An order between steps S21 and S22 is not strictly limited. For example, in some embodiments, step S22 is performed after step S21. In some other embodiments, steps S21 and S22 can be performed synchronously. For step S23, after the splitting is completed, the current collector jumbo roll 112 is split into a plurality of current collectors 102 distributed along the second direction. The electrode sheet 101 obtained through splitting includes the current collector 102, the first film layer 105, the second film layer 106, and the third film layer 107. The first film layer 105, the second film layer 106, the third film layer 107, and the current collector 102 jointly define a tab welding groove 108. Dashed lines represent splitting lines. The intermediate product moves along the splitting lines relative to a cutter to be split. One splitting line is actually a junction between one first film layer 105 and one discontinuous layer 104 adjacent to each other.

In this embodiment, a plurality of first film layers 105 are formed simultaneously, as are a plurality of second film layers 106 and a plurality of third film layers 107. Therefore, the method of this embodiment is equivalent to simultaneously performing coating for a plurality of electrode sheets 101, which can improve coating efficiency, thereby improving productivity of electrode sheets 101. Further, a plurality of first front sections 109 and the plurality of second film layers 106 can be formed simultaneously; and a plurality of first rear sections 111 and the plurality of third film layers 107 can be formed simultaneously.

A coating device suitable for the method of manufacturing an electrode sheet shown in FIG. 4 is described below.

In some embodiments, the coating device includes a discharge mechanism and a feeding mechanism connected to each other. As shown in FIG. 7, the discharge mechanism has a plurality of first discharge ports 202 and a plurality of second discharge ports 203, and the first discharge ports 202 and the second discharge ports 203 are alternately distributed in the second direction. The feeding mechanism and the discharge mechanism are configured as follows: during t₁, the feeding mechanism causes the first active material to flow out of the plurality of first discharge ports 202 respectively, and causes the second active material to flow out of the plurality of second discharge ports 203; during t₂, the feeding mechanism causes the first active material to flow out of the plurality of first discharge ports 202 respectively; and during t₃, the feeding mechanism causes the first active material to flow out of the plurality of first discharge ports 202 respectively, and causes the third active material to flow out of the plurality of second discharge ports 203 respectively.

For the definitions of t₁, t₂, and t₃, as well as how the feeding mechanism controls the active material to flow out of a discharge port, refer to the foregoing description. Details are not repeated here. As shown in FIG. 7, the first discharge ports 202 and the second discharge ports 203 being alternately distributed in the second direction means that one first discharge port 202 is provided between two adjacent discharge ports, and one second discharge port 203 is provided between two adjacent first discharge ports 202. A plurality of streams of first active materials respectively flowing out of the plurality of first discharge ports 202 during t₁ to t₃ finally form the plurality of first film layers 105. A plurality of streams of second active materials respectively flowing out of the plurality of second discharge ports 203 during t₂ finally form the plurality of second film layers 106. A plurality of streams of third active materials respectively flowing out of the plurality of third discharge ports during t₃ finally form the plurality of third film layers 107.

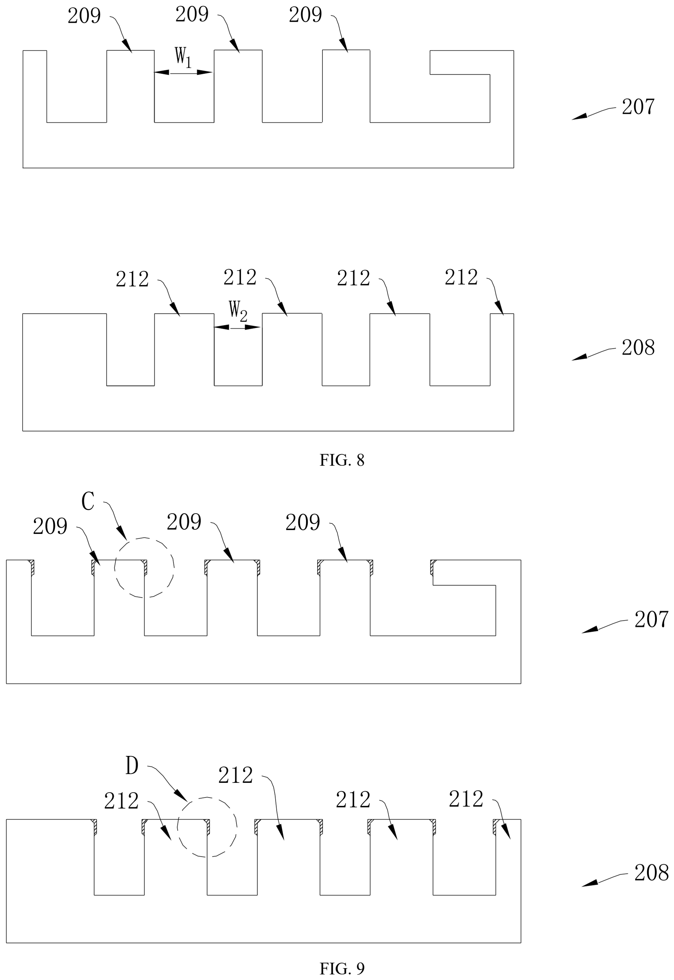

In some embodiments, the discharge mechanism includes one coating head 201, and the plurality of first discharge ports 202 and the plurality of second discharge ports 203 are located on the same coating head 201. As shown in FIG. 6, the coating head 201 includes an upper die 204, a middle die 205, and a lower die 206. The upper die 204, the middle die 205, and the lower die 206 are stacked, and the upper die 204 and the lower die 206 are respectively located on different sides of the middle die 205. The upper die 204 and the middle die 205 are stacked and define a first flow channel for the first active material to flow, and the first flow channel includes a first discharge slit 211. The lower die 206 and middle die 205 are stacked and define a second flow channel for the second active material and the third active material to flow, and the second flow channel includes a second discharge slit 214. The first flow channel and the second flow channel are separated from each other to prevent the first active material from entering the second flow channel and prevent the second active material and the third active material from entering a third flow channel. As shown in FIG. 8, the coating head 201 further includes an upper shim 207 and a lower shim 208. The upper shim 207 is detachably sandwiched between the upper die 204 and the middle die 205. The upper shim 207 includes a plurality of first separators 209 distributed at intervals along the second direction. As shown in FIG. 7, the first separators 209 block a portion of the first discharge slit 211, and portions of the first discharge slit 211 exposed outside the first separators 209 (that is, portions of the first discharge slit 211 not blocked by the first separators 209) form the plurality of first discharge ports 202. One first discharge port 202 is provided between two adjacent first separators 209. The lower shim 208 is sandwiched between the lower die 206 and the middle die 205. The lower shim 208 includes a plurality of second separators 212, and the plurality of second separators 212 are distributed at intervals along the second direction. As shown in FIG. 7, the second separators 212 block a portion of the second discharge slit 214, and portions of the second discharge slit 214 exposed outside the first separators 209 (that is, portions of the second discharge slit 214 not blocked by the second separators 212) form the plurality of second discharge ports 203. One second discharge port 203 is provided between two adjacent second separators 212. It should be noted that, since the first discharge ports 202 and the second discharge ports 203 are alternately distributed, one second separator 212 is provided between two adjacent first separators 209, and one first separator 209 is provided between two adjacent second separators 212.

Common commercially-available coating heads 201 use a slit as a discharge port, while the foregoing coating head 201 has the first discharge slit 211 divided into the plurality of first discharge ports 202 by using the upper shim 207, and the first discharge slit 214 divided into the plurality of second discharge ports 203 by using the lower shim 208. In this way, a user can obtain the coating head 201 with the plurality of first discharge ports 202 and the plurality of second discharge ports 203 by easily modifying a common commercially-available coating head 201 (adding the lower shim 208), which helps to reduce costs of the coating device, thereby reducing costs of the electrode sheet 101.

In some embodiments, the first discharge ports 202 and the second discharge ports 203 are distributed at intervals in the second direction. A length of the tab welding groove 108 in the second direction is A, a spacing between two adjacent tab welding grooves 108 in the second direction is B (that is, a length of the first film layer 105 in the second direction is B), a length of the first discharge port 202 in the second direction is W₁, and a length of the second discharge port 203 in the second direction is W₂. The coating device satisfies the following two conditions: (1) 0.5 mm ≤ A - W₂ ≤ 3 mm, and (2) 0.5 mm ≤ B - W₁ ≤ 3 mm. Specifically, as shown in FIG. 8, a spacing between two first separators 209 in the second direction is W₁, and a spacing between two second separators 212 in the second direction is W₂.

The foregoing arrangement helps to reduce a risk of the electrode sheet 101 being excessively thick at a junction between the first film layer 105 and the second film layer 106 and a junction between the first film layer 105 and the third film layer 107 (for a technical effect, refer to the following experimental data). Specifically, the active material is a fluid, which is diffused in all directions and leveled under gravity. Therefore, a final coverage width of the active material is slightly greater than a width when the active material just falls onto the to-be-coated surface 103. If edges of the first discharge port 202 at two ends exactly coincide with edges of two adjacent second discharge ports 203, the active material can accumulate at the junction between the first film layer 105 and the second film layer 106. As a result, the active material in this region is excessively thick. Consequently, the thickness is inconsistent across different regions of the electrode sheet 101. If the active material is excessive thick at the junction between the second film layer 106 or the third film layer 107 and the first film layer 105, the electrode sheet 101 is prone to bulging during winding and a risk of strip breakage or powder shedding during rolling subsequently.

When A, B, W₁, and W₂ satisfy the foregoing conditions, edges of the first discharge port 202 and the second discharge port 203 are spaced apart from each other to form sufficient space for the active material to be leveled, thereby reducing a risk of active material accumulation at the junction between either the second film layer 106 or the third film layer 107 and the first film layer 105. It should be noted that although there is a spacing between the edges of the first discharge port 202 and the second discharge port 203, due to leveling of the active material, both the second film layer 106 and the third film layer 107 finally can be connected to the first film layer 105. Further, to reduce the risk of the active material being excessively thick at the junction between two film layers, A, B, W₁, and W₂ can satisfy: A - W₂ = 2 mm, and B - W₁ = 2 mm.

As shown in FIG. 9, in some embodiments, the first separator 209 is provided with a first chamfer 210 at an end located within the first discharge slit 211, and a width of the first chamfer 210 is 0.5 mm to 5 mm. An angle of the first chamfer 210 can be 45°. The first chamfer 210 allows for appropriate diffusion of the first active material during discharging, to reduce a risk of seams between the first film layer 105 and the second film layer 106 or the third film layer 107. Similarly, the second separator 212 is provided with a second chamfer 213 at an end located within the second discharge slit 214, and a width of the second chamfer 213 is 0.5 mm to 5 mm. An angle of the second chamfer 213 can be 45°. The second chamfer 213 allows for appropriate diffusion of the second active material and the third active material during discharging, to reduce the risk of seams between the first film layer 105 and the second film layer 106 or the third film layer 107. Preferably, the first chamfer 210 and the second chamfer 213 have a width of 3 mm.

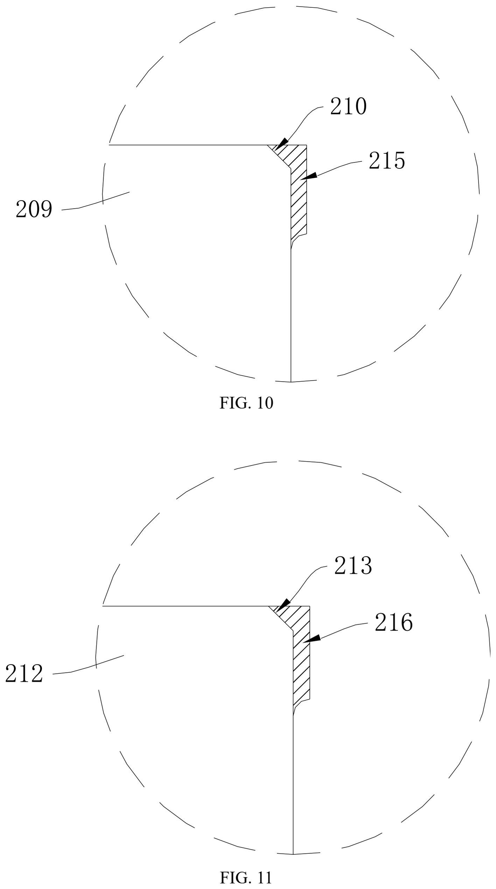

As shown in FIG. 10, in some embodiments, the upper shim 207 further includes a first step portion 215, and a thickness of the first step portion 215 is less than a thickness of the first separator 209, so that the first step portion 215 does not block the first chamfer 210. The first step portion 215 is connected to a side portion of the first separator 209 at an end of the first separator 209 located within the first discharge slit 211. The thickness of the first step portion 215 is 0.2 mm to 0.6 mm. Compared with an upper shim 207 without a first step portion 215, the upper shim 207 with the first step portion 215 can appropriately reduce a flow rate of the active material at the edge of the first discharge port 202, thereby preventing the active material from being excessively thick at the film layer junction. Similarly, as shown in FIG. 11, the lower shim 208 can include a second step portion 216, and a thickness of second step portion 216 is less than a thickness of the second separator portion 212, so that the second step portion 216 does not block the second chamfer 213. The second step portion 216 is connected to a side portion of the second separator 212 at an end of the second separator 212 located within the second discharge slit 214. The thickness of the second step portion 216 is 0.2 mm to 0.6 mm. Preferably, a length of the first step portion 215 in the second direction can be set to 0.4 mm, and the thickness of the second step portion 216 can be set to 0.4 mm.

The junction between the first film layer 105 and the second film layer 106 is a first junction region, and the junction between the first film layer 105 and the third film layer 107 is a second junction region. A region in the active material layer other than the first junction region and the second junction region is a normal region. A thickness of the first junction region is Kⱼ, a thickness of the second junction region is K₂, and a thickness of the normal region is M. In some embodiments, the active material layer satisfies: 0.95 ≤ K₁/M ≤ 1, and/or 0.95 ≤ K₂/M ≤ 1. Such arrangement helps to reduce the thicknesses of the junction regions, thereby reducing the risk of bulging or strip breakage of the electrode sheet 101 during subsequent processing (for a technical effect, refer to the following experimental data). For example, in FIG. 1, a front edge of the first film layer 105 is connected to a rear edge of the second film layer 106 to form the first junction region, the front edge of the first film layer 105 is connected to a rear edge of the third film layer 107 to form the second junction region, and the normal region includes a central region of the first film layer 105, a central region of the second film layer 106, and a central region of the third film layer 107.

Some experimental data is listed below to illustrate corresponding effects of the foregoing parameters. The following three experimental subjects were all tested in the following manner: after the electrode sheet 101 was dried, the thickness of the electrode sheet 101 was measured at a plurality of positions, and then winding and rolling conditions of the electrode sheet 101 were observed. In addition, the three experimental subjects were identical in the number of first separators 209, the number of second separators 212, the shim thickness, and the like. Experimental results are shown in the following table.

| | Experimental subject 1 | Experimental subject 2 | Experimental subject 3 |
|---|---|---|---|
| W₁ | B-2 | B-1 | B |
| W₂ | A-2 | A-1 | A |
| Width of a chamfer | 3 mm | 3 mm | No chamfer |
| Thickness of a step portion | 0.4 mm | 0.4 mm | No step portion |
| Measured thickness of a normal region (non-junction region) | 78-80 µm | 78-80 µm | 78-80 µm |
| Measured thickness of a junction region | 76-78 µm | 77-78 µm | 83-86 µm |
| Percentage of the thickness of the junction region to the thickness of the normal region | 95%-99% | 96%-99% | 103%-107% |
| Whether bulging occurs | No | No | Yes |
| Whether strip breakage occurs | No | No | Yes |

In descriptions of the present disclosure, descriptions of the reference term such as "an embodiment," "some embodiments," "exemplary embodiments," "example," "specific example," or "some examples" means that a specific feature, structure, material, or characteristic described with reference to the embodiment or example is included in at least one embodiment or example of the present disclosure. In this specification, example descriptions of the foregoing terms do not necessarily refer to the same embodiment or example. In addition, described specific features, structures, materials, or characteristics can be combined appropriately in any one or more embodiments or examples.

## Claims

1. A method of manufacturing an electrode sheet, **characterized by** comprising:
coating a to-be-coated surface of a current collector with a first active material to form a first film layer;
coating the to-be-coated surface with a second active material to form a second film layer; and
coating the to-be-coated surface with a third active material to form a third film layer;
wherein any two of the first active material, the second active material, and the third active material are made of the same material; after the first film layer, the second film layer, and the third film layer are formed, the second film layer and the third film layer are both connected to the first film layer; the second film layer and the third film layer are distributed at intervals along a first direction; the first film layer and the second film layer are distributed along a second direction and connected to each other; the second film layer and the third film layer are located on the same side of the first film layer; the third film layer is connected to the first film layer; any two of the first direction, the second direction, and a thickness direction of the current collector are perpendicular to each other; and the first film layer, the second film layer, and the third film layer, and the to-be-coated surface jointly define a tab welding groove.

2. The method of manufacturing an electrode sheet according to claim 1, **characterized in that** a step of forming the first film layer comprises: coating the first active material along the first direction;
a step of forming the second film layer comprises: coating the second active material along the first direction; and
a step of forming the third film layer comprises: coating the third active material along the first direction.

3. The method of manufacturing an electrode sheet according to claim 2, **characterized in that** the first active material and the second active material are coated synchronously during a first time period; the first active material coated during the first time period forms a first front section; the second active material coated during the first time period forms the second film layer; and the first front section and the second film layer are distributed along the second direction and connected to each other;
the first active material is coated during a second time period; and the first active material coated during the second time period forms a first middle section;
the first active material and the third active material are coated synchronously during a third time period; the first active material coated during the third time period forms a first rear section; the third active material coated during the third time period forms the third film layer; the first rear section and the third film layer are distributed along the second direction and connected to each other; and a coating end point of the second active material and a coating start point of the third active material are distributed at intervals along the first direction; and
the first time period, the second time period, and the third time period are sequentially set chronologically; and the first front section, the first middle section, and the first rear section are sequentially connected along the first direction to form the first film layer.

4. The method of manufacturing an electrode sheet according to claim 3, **characterized in that** the first film layer, the second film layer, and the third film layer jointly constitute an active material layer; a junction between the first film layer and the second film layer is a first junction region; a junction between the first film layer and the third film layer is a second junction region; and a region in the active material layer other than the first junction region and the second junction region is a normal region; and
a thickness of the first junction region is K₁, a thickness of the second junction region is K₂, a thickness of the normal region is M, and the active material layer satisfies: 0.95 ≤ K₁/M ≤ 1, and/or 0.95 ≤ K₂/M ≤ 1.

5. A method of manufacturing an electrode sheet, **characterized by** comprising:
coating a to-be-coated surface of a current collector jumbo roll with a first active material to form a plurality of first film layers, wherein a coating direction of the first active material is a first direction; the plurality of first film layers are distributed at intervals along a second direction; and any two of the first direction, the second direction, and a thickness direction of the current collector are perpendicular to each other;
coating the to-be-coated surface with a second active material and a third active material to form a plurality of discontinuous layers, wherein the discontinuous layer comprises a second film layer and a third film layer distributed at intervals along the first direction; and after the discontinuous layers and the first film layers are formed, the first film layers and the discontinuous layers are alternately distributed in the second direction; the second film layer and the third film layer are both connected to the first film layer; and the number of discontinuous layers is the same as the number of the first film layers; and
splitting an intermediate product to form a plurality of electrode sheets, wherein the intermediate product is the current collector jumbo roll provided with the plurality of first film layers and the plurality of discontinuous layers; and the current collector jumbo roll is split into a plurality of current collectors; the electrode sheet obtained through splitting comprises the current collector, the first film layer, the second film layer, and the third film layer; and the first film layer, the second film layer, the third film layer, and the current collector jointly define a tab welding groove.

6. A coating device used in the method of manufacturing an electrode sheet according to claim 3, **characterized in that** the coating device comprises a discharge mechanism and a feeding mechanism connected to each other; the discharge mechanism has a first discharge port and a second discharge port distributed along the second direction; and the feeding mechanism and the discharge mechanism are configured as follows:
during the first time period, the feeding mechanism causes the first active material to flow out of the first discharge port, and causes the second active material to flow out of the second discharge port;
during the second time period, the feeding mechanism causes the first active material to flow out of the first discharge port; and
during the third time period, the feeding mechanism causes the first active material to flow out of the first discharge port, and causes the third active material to flow out of the second discharge port.

7. The coating device according to claim 6, **characterized in that** the discharge mechanism comprises two coating heads; one of the coating heads is provided with the first discharge port; and the other coating head is provided with the second discharge port;
or
the discharge mechanism comprises one coating head; and the first discharge port and the second discharge port are arranged on the same coating head.

8. A coating device used in the method of manufacturing an electrode sheet according to claim 5, **characterized in that** the coating device comprises a discharge mechanism and a feeding mechanism connected to each other; the discharge mechanism has a plurality of first discharge ports and a plurality of second discharge ports; the first discharge ports and the second discharge ports are alternately distributed in the second direction; and the feeding mechanism and the discharge mechanism are configured as follows:
during a first time period, the feeding mechanism causes the first active material to flow out of the plurality of first discharge ports respectively, and causes the second active material to flow out of the plurality of second discharge ports;
during a second time period, the feeding mechanism causes the first active material to flow out of the plurality of first discharge ports respectively; and
during a third time period, the feeding mechanism causes the first active material to flow out of the plurality of first discharge ports respectively, and causes the third active material to flow out of the plurality of second discharge ports respectively, wherein the first time period, the second time period, and the third time period are sequentially set chronologically.

9. The coating device according to claim 8, **characterized in that** the first discharge ports and the second discharge ports are distributed at intervals in the second direction; a length of the tab welding groove in the second direction is A, a spacing between two adjacent tab welding grooves in the second direction is B, a length of the first discharge port in the second direction is W₁, a length of the second discharge port in the second direction is W₂, 0.5 mm ≤ A - W₂ ≤ 3 mm, and 0.5 mm ≤ B - W₁ ≤ 3 mm.

10. The coating device according to claim 9, **characterized in that** A - W₂ = 2 mm, and B - W₁ = 2 mm.

11. The coating device according to claim 8, **characterized in that** the discharge mechanism comprises one coating head, and the coating head comprises:
an upper die;
a middle die, wherein the upper die and the middle die are stacked and define a first flow channel for the first active material to flow; and the first flow channel comprises a first discharge slit;
a lower die, wherein the lower die and the middle die are stacked and define a second flow channel for the second active material and the third active material to flow; the second flow channel comprises a second discharge slit; the upper die and the lower die are respectively located on different sides of the middle die; and the first flow channel and the second flow channel are separated from each other;
an upper shim, wherein the upper shim is sandwiched between the upper die and the middle die; and the upper shim comprises a plurality of first separators distributed at intervals along the second direction; a portion of the first discharge slit is blocked by the first separators; portions of the first discharge slit exposed outside the first separators form the plurality of first discharge ports; and one first discharge port is provided between two adjacent first separators; and
a lower shim, wherein the lower shim is sandwiched between the lower die and the middle die; and the lower shim comprises a plurality of second separators distributed at intervals along the second direction; a portion of the second discharge slit is blocked by the second separators; portions of the second discharge slit exposed outside the first separators form the plurality of second discharge ports; and one second discharge port is provided between two adjacent second separators.

12. The coating device according to claim 11, **characterized in that** the first separator is provided with a first chamfer at an end located within the first discharge slit; and a width of the first chamfer is 0.5 mm to 5 mm;
and/or
the second separator is provided with a second chamfer at an end located within the second discharge slit; and a width of the second chamfer is 0.5 mm to 5 mm.

13. The coating device according to claim 11, **characterized in that** the upper shim further comprises a first step portion; a thickness of the first step portion is less than a thickness of the first separator; the first step portion is connected to a side portion of the first separator at an end of the first separator located within the first discharge slit; and the thickness of the first step portion is 0.2 mm to 0.6 mm;
and/or
the lower shim further comprises a second step portion; a thickness of the second step portion is less than a thickness of the second separator; the second step portion is connected to a side portion of the second separator at an end of the second separator located within the second discharge slit; and the thickness of the second step portion is 0.2 mm to 0.6 mm.
